(19) Europäisches Patentamt / European Patent Office / Office européen des brevets

(11) **EP 4 345 449 B1**

(12) **EUROPEAN PATENT SPECIFICATION**

(45) Date of publication and mention
of the grant of the patent:
**24.06.2026   Bulletin 2026/26**

(21) Application number: **21953284.3**

(22) Date of filing: **17.09.2021**

(51) International Patent Classification (IPC):
*F16L 55/40* (2006.01)    *F16L 101/30* (2006.01)
*G01N 27/9013* (2021.01)    *G01N 27/90* (2021.01)
*G01N 27/904* (2021.01)

(52) Cooperative Patent Classification (CPC):
**F16L 55/40; G01N 27/902; G01N 27/904;
G01N 27/9046;** F16L 2101/30

(86) International application number:
**PCT/CN2021/119044**

(87) International publication number:
**WO 2023/015675 (16.02.2023 Gazette 2023/07)**

(54) **PIPELINE NON-DESTRUCTIVE TESTING DEVICE**

ZERSTÖRUNGSFREIE PRÜFVORRICHTUNG FÜR ROHRLEITUNGEN

DISPOSITIF DE CONTRÔLE NON DESTRUCTIF DE PIPELINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **13.08.2021   CN 202110930910**

(43) Date of publication of application:
**03.04.2024   Bulletin 2024/14**

(73) Proprietor: **Deyuan Technology Co., Ltd.**
**Chengdu, Sichuan 610041 (CN)**

(72) Inventors:
• **GAO, Bin**
  **Chengdu, Sichuan 610041 (CN)**
• **JIANG, Shiqiang**
  **Chengdu, Sichuan 610041 (CN)**
• **SHEN, Liang**
  **Chengdu, Sichuan 610041 (CN)**
• **TIAN, Guiyun**
  **Chengdu, Sichuan 610041 (CN)**
• **LUO, Fei**
  **Chengdu, Sichuan 610041 (CN)**
• **ZHANG, Yong**
  **Chengdu, Sichuan 610041 (CN)**
• **YANG, Yupei**
  **Chengdu, Sichuan 610041 (CN)**

(74) Representative: **JD&P Patent Attorneys**
**Joanna Dargiewicz & Partners**
**ul. Mysliborska 93A/50**
**03-185 Warszawa (PL)**

(56) References cited:
CN-A- 101 324 477      CN-A- 102 159 944
CN-A- 103 604 022      CN-A- 103 928 991
CN-A- 105 738 467      CN-A- 105 891 323
CN-A- 106 532 976      CN-A- 108 180 883
CN-A- 112 130 099      CN-A- 112 130 099
CN-U- 216 117 453      DE-A1- 3 624 717
US-A1- 2010 288 049    US-A1- 2015 316 195
US-A1- 2020 166 479    US-B1- 6 239 593

• LIU CUNYUE, DONG YONGGUI: "Resonant
enhancement of a passive coil-capacitance loop
in eddy current sensing path", MEASUREMENT.,
INSTITUTE OF MEASUREMENT AND CONTROL.
LONDON, GB, vol. 45, no. 3, 1 April 2012
(2012-04-01), GB
, pages 622 - 626, XP093034231, ISSN: 0263-2241,
DOI: 10.1016/j.measurement.2011.12.006

EP 4 345 449 B1

## Description

Technical Field

The invention belongs to the field of non-destructive testing (NDT), specifically, an NDT device for pipeline.

BACKGROUND

As the integrity of pipeline is essential to safety in oil & gas transportation and therefore highly concerned by pipeline employer, and poor integrity of pipeline caused by corrosion to pipeline or oil stealing by punching holes on the pipeline will result in a significant economic loss and severe environmental and social impact, it is necessary to test the pipeline regularly, to find out such failure as corrosion, deformation, and leakage in the pipeline, thereby safeguarding the reliable operation of the pipeline.

Currently, methods such as magnetic flux leakage testing and ultrasonic testing are widely used to detect pipeline defects, which have become an important pre-control means to ensure the safe transportation of oil and gas pipelines and are of great significance in eliminating risk factors from said pipelines. With better qualitative and quantitative analysis capability of the defects, the above testing method can effectively evaluate the operating state of the pipeline, and indirectly reduce the incidence of pipeline accidents, thus avoiding heavy losses to the national economy and heavy casualties. However, instruments available for magnetic flux leakage testing feature a heavy load, a certain requirement on flow rate, flow velocity and pressure of the medium, more stringent requirements on the cleanliness of pipeline (pigging needed for many times before commencement of testing) and poor flexibility of equipment in the pipeline because of a greater length (3-4 sections needed). The couplant is required for ultrasonic testing, featuring a lower testing speed and therefore a longer time for testing, also with a certain near-field blind area. To overcome aforesaid problems of large equipment size, poor flexibility of equipment in pipeline, more stringent requirements on cleanliness inside the pipeline and low testing efficiency in said testing methods above, eddy current testing applicable to the conductive pipeline testing is put forward.

Eddy current testing is now an effective method for quantitative nondestructive assessment of surface/-sub-surface defects of pipeline structures. It features a rapid non-contact testing process with a higher capability to test surface/sub-surface defects, has become an important pre-control means to ensure the safe transportation of oil and gas pipelines, and is of great significance in eliminating risk factors from said pipelines.

As for the invention, the testing probe generally comprises an excitation coil and an induction coil (the testing coil). An eddy current field is formed via induction on the surface of a tested piece (tested specimen) under the effect of a varying magnetic field produced by the excitation coil. The size and shape of said eddy current field depend on the degree of excitation, parameters of the coil, materials of tested specimen, etc. When the testing probe detects the defect, the original eddy current goes around the defect, which disturbs the eddy current and further affects the magnetic field generated by the eddy current. The defects can be qualitatively and quantitatively analyzed by detecting the change in the magnetic field with the testing coil or a magnetic sensor and extracting the phase and amplitude of a testing signal. The sensitivity and the lift-off height of the eddy current testing probe have always been a hotspot in the eddy current testing field, and the coupling degree between the excitation coil and the testing coil is an important factor affecting the sensitivity and the lift-off height of the testing probe. Therefore, an urgent technical problem to be solved at present is how to improve the coupling degree between the excitation coil and the testing coil.

A US patent application No. 2010288049A1 discloses an in-line inspection tool for inspecting the wall of a pipeline while traveling therethrough. The in-line inspection tool may include a transmitter, a signal generator, one or more receivers, and a decoder. The signal generator may generate a pseudorandom signal, generate an inspection signal, and drive the transmitter with a convolution of the pseudorandom signal and the inspection signal. The transmitter may transmit the convoluted signal to the wall of the pipeline. One or more receivers may receive from the wall of the pipeline a received signal comprising at least one of the convoluted signal and a reflection of the convoluted signal. The decoder may identify the inspection signal within the received signal by cross correlating the received signal and the pseudorandom signal.

SUMMARY OF THE INVENTION

The invention discloses an NDT device for pipeline, to effectively overcome the problem of lower sensitivity and smaller lift-off height of testing probe because of a poor degree of coupling between the excitation coil and receiving coil of the existing eddy current testing probe. The invention is set out in the appended set of claims.

To realize the purpose of the invention, the invention discloses an NDT device for pipeline, as claimed in claim 1, comprising:
A mobile carrier, mainly used to carry and install the probe testing assembly, wherein the mobile carrier can be of a direct tubular structure, or, with other structures arranged on the mobile carrier, the mobile carrier can move with fluid in pipeline or be moved by an actuator.

A probe testing assembly, including a testing component installed on the mobile carrier with a testing element, wherein the testing component is of an integrated structure with the testing element (one or more testing elements on the testing component, i.e. no restriction on quantity of said testing element); once the NDT device for pipeline is placed inside the pipeline, the testing element encapsulating testing probe is close to the inner pipe wall, the testing probe is mainly used to detect any defects on the inner pipe wall, the probe testing assembly can be composed of only one testing component, or jointly of multiple testing components, and accordingly, one or more probe testing assemblies can be available.

The NDT device for pipeline is also provided with a data processing unit, a first signal conditioning unit and a second signal conditioning unit, wherein the testing probe comprises an excitation coil, a receiving coil and a passive resonance coil between the excitation coil and the receiving coil;

The data processing unit is used to generate an excitation signal; the data processing unit, the first signal conditioning unit and the excitation coil are connected in sequence; and the receiving coil, the second signal conditioning unit, and the data processing unit are connected in sequence.

Further , said mobile carrier comprises a cylindrical capsule and a sealing rubber cup, mainly of a mobile carrier structure that can move with fluid in the pipeline, wherein the cylindrical capsule is used for bearing and installation of probe testing assembly and sealing rubber cup; the sealing rubber cup that is made of elastic materials is in a shape of cup when NDT device for pipeline is placed into the pipeline, and edge of the sealing rubber cup can be tightly propped against the inner pipe wall when the edge of the sealing rubber cup is in contact with the inner pipe wall; the sealing rubber cup is used to divide the inside of the pipe into front and rear chambers, and by virtue of a difference in hydraulic pressure between the front and rear chambers of the sealing rubber cup, the NDT device for pipeline can move inside the pipeline; both the sealing rubber cup and the probe testing assembly are installed on the cylindrical capsule; upon installation of the sealing rubber cup and the probe testing assembly, both the center of the sealing rubber cup and the center of the probe testing assembly are located on the central axis of the cylindrical capsule; with NDT device for pipeline placed inside the pipeline, the central axis of cylindrical capsule and the central axis of pipeline are collinear, the sealing rubber cup is placed in front of the probe testing assembly, and because the edge of the sealing rubber cup is tightly propped against the inner pipe wall, inner pipe wall can be cleaned by the sealing rubber cup with NDT device for pipeline moving forward, also with sealing end of sealing rubber cup moving in the same direction as elastic testing element of probe testing assembly but in the opposite direction to mobile carrier, that is, with mobile carrier moving forward, the sealing end of the sealing rubber cup and the elastic testing element are moving backward, while with mobile carrier moving backward, the sealing end of the sealing rubber cup and the elastic testing element are moving forward, so that with the mobile carrier moving forward, the sealing rubber cup and the elastic testing element are moving forward along the inner pipe wall.

Further, all of the said data processing unit, the first signal conditioning unit and second signal conditioning unit are installed inside the cylindrical capsule, and the battery module that is used to supply power for the data processing unit is also installed inside the cylindrical capsule.

Further, a bumper board is also installed at the head of the mobile carrier, wherein said bumper board covers the head of the mobile carrier or is directly installed on the front end face of the mobile carrier, to on one hand protect such head, and on the other hand control the impact force applied to the mobile carrier moving forward.

Further, said probe testing assembly is divided into at least two sets, each of which is installed in sequence outside the mobile carrier along the axis of the mobile carrier, wherein such installation of probe testing assembly outside the mobile carrier means that only the testing element other than the entire structure of the probe testing assembly is located outside the mobile carrier upon installation of the elastic testing assembly; there are multiple testing components in each set of the probe testing assembly, the pipe walls in the circumferential direction can be covered by the total range of testing contributed by testing probes on said multiple testing components, and under the common effect contributed by the testing probes on multiple testing components, the entire circumferential profile of the pipeline can be tested with NDT device for pipeline moving forward inside the pipeline, so that the NDT device for pipeline can move forward in a rotation-free manner.

Further, said testing element is of an elastic testing element, which can not only deform by itself but also move flexibly at the radial direction of the pipeline so that the elastic testing element can deform while impacting an object or bearing an external force. With the NDT device for pipeline placed inside the pipeline, each of the elastic testing elements, during the testing, can be propped against the inner pipe wall, so that the outer side of the elastic testing element can be propped against tightly the inner pipe wall.

Further, said elastic testing element is made of elastic materials which cover testing probes inside, wherein the testing probes are encapsulated in the course of production and fabrication of the elastic testing elements, so there is no need to install the testing probes upon production of the elastic testing element, which can significantly improve both the encapsulation effect of the testing probes and the production efficiency of the elastic testing probes.

Further, a contact surface for testing is formed at one side of the elastic testing element that is propped against the inner pipe wall, i.e. surface contact is formed between the elastic testing element and the inner pipe wall. Because the elastic testing element can deform by itself, once the elastic testing element is propped against the inner pipe wall, said contact surface for testing can be attached to the inner pipe wall.

Further, said testing component is also provided with a connector, wherein such connector and the elastic testing element can be made of same or different materials and are of an integrated structure, mainly referring to that the connector and the elastic testing element are fixed into an integrated structure or they are of the integrated structure at the beginning. No restrictions are applied to the materials of the connector, and such connector is installed on the mobile carrier so that the testing components can be installed on the mobile carrier. With testing components installed and fixed, the elastic testing element can, under the elastic effect, move at the radial direction of the connector, so that the elastic testing element can deform while impacting an object or bearing an external force.

Further, said testing component is also provided with a transition section that is located between the connector and the elastic testing element, that is, the connector, the transition section, and the elastic testing element are integrated, mainly referring to that the connector and the transition section are fixed into the integrated structure, and the transition section and the elastic testing element are fixed into the integrated structure, or the testing components are of integrated structure at the beginning; moreover, the connector and the mobile carrier are connected vertically, preferably referring to that the surface of the connector is vertical to the surface of the mobile carrier, but this connector can also be connected in parallel to the mobile carrier, that is, the surface of connector is in parallel to the surface of the mobile carrier, and therefore the connector can be engaged and fixed onto the mobile carrier.

Further, said probe testing assembly further comprises an annular connector, wherein said annular connector and the elastic testing element can be made of the same or different materials; multiple testing components in the probe testing assembly are spaced on the periphery of the annular connector; the annular connector and the testing element are fixed into the integrated structure or the annular connector is of an integrated structure at the beginning. No restrictions are applied to the materials of this annular connector, and the annular connector can be directly and fixedly sleeved on the mobile carrier or indirectly fixed after being sleeved on the mobile carrier. The elastic testing element can, under the elastic effect, move at the radial direction of the annular connector, so that the elastic testing element can deform while impacting an object or bearing an external force.

Further, said testing component is also provided with a transition section that is located between the annular connector and the elastic testing element, that is, the annular connector, the transition section and the elastic testing element are integrated, mainly referring to that the annular connector and the transition section are fixed into the integrated structure, and the transition section and the elastic testing element are fixed into the integrated structure, or the probe testing assembly is of an integrated structure at the beginning.

Further, the first signal conditioning unit comprises a digital-to-analog conversion module and a first signal amplification module which are connected in sequence; and the second signal conditioning unit comprises a second signal amplification module and an analog-to-digital conversion module which are connected in sequence.

Said system further comprises a management control unit and/or a host computer in a two-way connection with the data processing unit.

Further, the geometrical centers of said excitation coil, passive resonance coil and receiving coil are collinear.

Further, said excitation coil is of a differential coil, while said passive resonance coil and receiving coil are of absolute coils.

Further, said excitation coil, passive resonance coil and receiving coil are PCB planar coils or FPC planar coils.

Further, said excitation coil is provided with two rectangular field coils subject to a symmetrical layout.

Further, said passive resonance coil is provided with multiple secondary resonance coils on PCB that are subject to serial connection and stratified layout; and said receiving coil is provided with multiple secondary receiving coils on PCB that are subject to serial connection and stratified layout.

Further, a resonance point regulating capacitor is connected in series with said passive resonance coil.

Further, said mobile carrier is also provided with a mileage testing assembly that is used to acquire mileage data, wherein said mileage testing assembly is used to locate the testing position of the testing probe by testing the position where the mobile carrier is moving forward in the pipeline, to locate the defect in the pipeline.

Further, said mileage testing assembly is provided with a supporting rod, a wheel support, an odometer wheel and a mileage detector; the supporting rod is installed on the mobile carrier and swings in the radial direction of the pipeline (from now on "up and down"), the wheel support is installed on the supporting rod and swings in a direction perpendicular to the radial direction as well as an axial direction of the pipeline (from now on "left and right"), wherein this design focuses on that the direction of swinging of wheel support is different from the direction of swinging of supporting rod; the odometer wheel is installed rotatably on the wheel support, with NDT device for pipeline moving forward inside the pipeline, the odometer wheel is propped against tightly the inner pipe wall; odometer wheel will rotate with the NDT device for pipeline moving forward, and then the mileage detector installed on the wheel support can, based on the number of revolutions of the odometer wheel, acquire the mileage data; the output end of the mileage detector is connected with the data processing unit, to calculate the position where the mobile carrier moves forward as per the perimeter of the odometer wheel and number of revolutions of the odometer wheel, thereby locating the testing probe and further the defect in the pipeline.

Further, the sealing end cap is installed at one end of the wheel support close to the sensor, wherein said sealing end cap is in a shape of the cap and a cavity is formed between the sealing end cap and the wheel support; preferably said cavity is of a sealing chamber, but can also be of a non-sealing chamber, with mileage detector inside.

Further, spring is also connected between the supporting rod and the mobile carrier, wherein the spring, the supporting rod, and the mobile carrier are connected into a triangular structure, the spring can itself provide an elastic effect, and this structure is mainly applicable to the installation that the supporting rod swings up and down relatively to the mobile carrier, and wheel support swings left and right relatively to the supporting rod.

Further, said mobile carrier is also provided with a mounting seat on which the supporting rod is hinged, so that the supporting rod can be installed on the mobile carrier through the mounting seat that is directly fixed on the mobile carrier, to avoid the supporting rod from directly being hinged with the mobile carrier.

Further, an open slot is formed at the connection between the supporting rod and the wheel support, wherein the wheel support is hinged and installed into the open slot, and the point of hinge for wheel support is located in the open slot and can be protected by the periphery of the open slot.

Further, the open slot is formed on the end face of the supporting rod that is rectangular, wherein no restrictions are applied to the shape (rectangle) of this open slot, but the specific shape of the open slot can depend on the actual installation. A rectangular open slot is only a preferential embodiment.

Further, multiple mileage detector assemblies are spaced at the circumferential direction of the mobile carrier, wherein these assemblies can be spaced at a fixed interval or not, i.e. no restrictions are applied to the spacing between the mileage detector assemblies.

The invention has the following beneficial effects:

(1) Eddy current testing is realized by the data processing unit, the first signal conditioning unit, the second signal conditioning unit, and the testing probe without additional magnetizing treatment devices, thus greatly reducing the volume of the system. The cleanliness requirement for the inside of the pipeline is greatly reduced due to the certain lift-off testing capacity of the testing probe. In addition, based on the high integration of the testing probe, the invention not only improves the flexibility of the device through the pipeline but also greatly reduces the system cost. Further, by introducing a passive resonance coil between the excitation coil and the receiving coil in the invention, the coupling between the excitation coil and the receiving coil can be enhanced, thus significantly improving the energy transmission efficiency, further improving the sensitivity of the testing probe so that the probe can accurately test the pipeline defects at a higher lift-off height, and ultimately improving the defect detection capacity of the probe.

(2) By integrating the data processing unit, the first signal conditioning unit, the second signal conditioning unit, the battery module and the management control unit into the cylindrical capsule, the overall structural design is more compact and the dimensions are smaller, making it easy for the device to pass through the pipeline elbow with small curvature, and making it possible for the device to be used for mileage testing and operate normally in the high-pressure environment without short circuit caused by water ingress.

(3) By setting the testing element as an elastic testing element and making the elastic testing element move elastically in the radial direction of the pipeline, the elastic testing element can always be propped against and attached onto the inner pipe wall during testing, thus improving the signal quality and the testing accuracy.

(4) By arranging at least two groups of probe testing assemblies, and making the total range of testing contributed by multiple testing probes cover the pipe wall in the circumferential direction, the range of testing can effectively cover a complete inner pipe wall in the circumferential direction, thus realizing 360° complete movement testing, and avoiding the problem that the pipe wall cannot be completely covered in the circumferential direction due to the arrangement of only one group of probe testing assemblies and the gap caused by radial movement of the elastic testing element.

(5) By using the elastic testing element made of elastic material and wrapping the testing probe with elastic material, the probe is sealed so that it has better water pressure resistance. In addition, with a specific angle, the elastic testing element can ensure that the probe fits well with the pipe wall, and provide sufficient supporting force to prevent the testing probe from shaking during testing and thus make it more stable.

(6) By providing a mileage detector to collect the mileage information of the mobile carrier carried by the invention, the pipeline defects can be located accurately.

(7) By providing a host computer to analyze the testing information fed back by the testing probe, the presence of defects of the pipeline can be determined and the position of the defective pipeline can be located. In addition, the host computer can also transmit the analysis results of these data to the server to realize data storage and sharing, and thus realize defect information traceability management for different pipelines.

(8) By aligning the geometric centers of the excitation coil, the passive resonance coil and the receiving coil, the energy transmission efficiency can be maximized.

(9) The excitation coil is a differential coil, while the passive resonance coil and the receiving coil are absolute coils. The differential coil can form uniform eddy current in the central area of the coil and can generate obvious eddy current change in the middle eddy current area when defects are detected, thus changing the magnetic field and facilitating the identification of defective parts.

(10) Adopting PCB planar coil or FPC planar coil, the probe has the characteristics of small size and high sensitivity to surface defects. In addition, with small effective lift-off, the probe is highly sensitive to defects and has broad application prospects in the field of eddy current testing. Further, the PCB planar coil can be directly manufactured and permanently fixed on the moving assembly. In addition, the FPC planar coil is elastic enough to allow consistency of the coil with the pipe surface to be tested, so the testing probe also has a very broad prospect in testing complex surface geometry.

(11) Under the action of the resonance coil, the secondary receiving coils arranged in a multilayered structure can improve the testing sensitivity while reducing the optimal testing frequency, and effectively reducing the requirements for excitation signals. Meanwhile, a multi-coil array created by a plurality of resonance sub-coils and receiving sub-coils can increase the testing range and reduce the testing time.

(12) By adjusting the resonance point of the capacitance regulating coil of the resonance point regulating capacitor, the testing capacity of the testing probe can be improved to be suitable for a wider testing environment.

## DESCRIPTION OF THE DRAWINGS

FIG. 1 is a three-dimensional structural diagram of the in-pipeline testing device provided by the invention;

FIG. 2 is a front view diagram of the in-pipeline testing device provided by the invention, which also shows the projection or perspective of two groups of probe testing assemblies on the sealing rubber cup;

FIG. 3 is a structural diagram of an embodiment structure of a probe testing assembly for the in-pipeline testing device provided by the invention;

FIG. 4 is a side view of the testing component shown in FIG. 3;

FIG. 5 is a three-dimensional cross-section diagram of the testing component shown in FIG. 3;

FIG. 6 is a three-dimensional diagram of another embodiment structure of a probe testing assembly for the in-pipeline testing device provided by the invention;

FIG. 7 is a sectional structural diagram of the probe testing assembly shown in FIG. 6;

FIG. 8 is a structural diagram of the in-pipeline testing device provided by the invention;

FIG. 9 is a sectional structural diagram of the in-pipeline testing device provided by the invention;

FIG. 10 is a structural diagram of the odometer wheel testing device;

FIG. 11 is a sectional structural diagram of the odometer wheel testing device;

FIG. 12 is a schematic diagram of the testing system provided by the invention;

FIG. 13 is a diagram of an excitation coil provided by the invention;

FIG. 14 is a diagram of a resonance coil provided by the invention;

FIG. 15 is a diagram of a receiving coil provided by the invention;

FIG. 16 is a schematic diagram showing the comparison of the testing effects before and after the introduction of a resonance coil provided by the invention;

FIG. 17 is a testing diagram for the tested ferromagnetic plate specimens with different sizes and different types of artificial defects for the tested specimen provided by the invention;

FIG. 18 is a diagram showing the testing result of the defect with different inclination angles at lift-off of 5 mm provided by the invention;

FIG. 19 is a diagram showing overall testing of X80 steel pipeline defects provided by the invention;

FIG. 20 is a schematic diagram showing the testing of X80 steel pipeline defects by a single testing probe provided by the invention;

FIG. 21 is a schematic diagram showing the testing of the odometer wheel provided by the invention;

FIG. 22 is a schematic diagram showing the acceleration testing result of a mobile carrier provided by the invention;

FIG. 23 is a schematic diagram showing the Euler angle testing result of a mobile carrier provided by the invention.

Marks and names of corresponding parts and components as shown on the drawings:
1 - mobile carrier; 11 - cylindrical capsule; 12 - battery module; 2 - probe testing assembly; 21 - connector; 22 - transition section; 23 - elastic testing element; 24 - testing probe; 21' - annular connector; 22' - transition section; 23' - elastic testing element; 3 - mileage testing assembly; 31- mounting seat; 32 - supporting rod; 33 - wheel support; 34 - odometer wheel; 35 - spring; 36 - open slot; 37 - sealing end cap; 38 - mileage detector; 4 - bumper board; 5 - sealing rubber cup; 6 - pressure-resistant connecting wire; 7 - pressure-resistant connector; 8 - bolt; 9 - spacer ring.

EMBODIMENTS

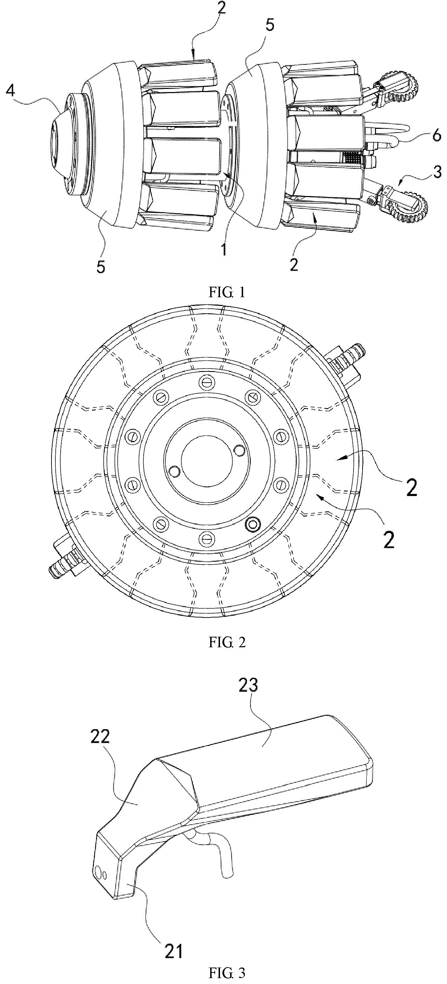

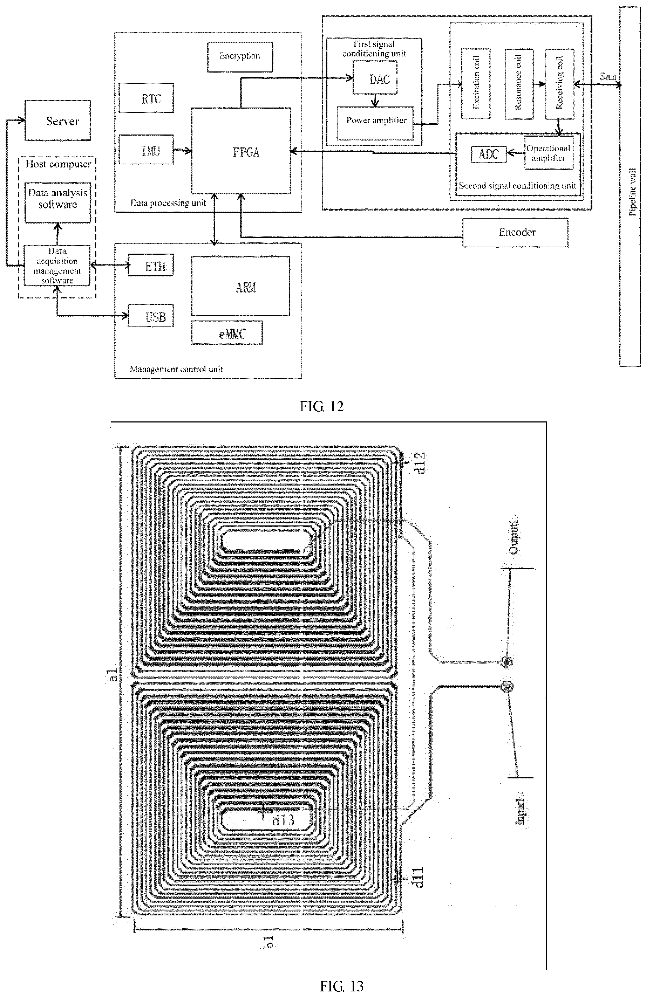

The invention will be further described in detail with the following specific embodiments and the attached drawings.
As shown in FIG. 1, the NDT device for pipeline provided by the invention comprises a mobile carrier 1 and a probe testing assembly 2. The probe testing assembly 2 is permanently or rotatably installed on the mobile carrier 1. The probe testing assembly 2 tests the inner pipe wall through the movement of the mobile carrier 1 in the pipeline, and the testing content of the probe testing assembly 2 can be determined by the testing probe 24 with different testing functions that is carried according to actual needs.
Under normal circumstances, the axis of the mobile carrier 1 is parallel to that of the pipeline, and the mobile carrier 1 can automatically advance in the pipeline or advance with the fluid through the carried traveling mechanism or other structures. When the mobile carrier 1 moves in the pipeline under the action of the fluid by carrying other structures, the action is the pushing action caused by the pressure difference between the front and rear sides of the mobile carrier 1 when the fluid flows. When the mobile carrier 1 moves in the pipeline under the action of fluid by carrying a traveling mechanism, the traveling mechanism can specifically include a driving mechanism arranged in the mobile carrier 1 and a traveling wheel arranged on the mobile carrier 1, which is driven by the driving mechanism to rotate. Specifically, the traveling wheels are respectively arranged at both ends of the mobile carrier 1, the probe testing assembly 2 can be arranged on the mobile carrier 1 between the traveling wheels, the traveling mechanism can be arranged outside or inside the mobile carrier 1, and existing technology can be adopted for the traveling mechanism.
The probe testing assembly 2 comprises a testing component installed on the mobile carrier 1 and having a testing element in which the testing probe 24 is encapsulated. When the mobile carrier 1 is advancing, the testing probe 24 corresponds to the inner pipe wall, so that the testing probe 24 can test the inner pipe wall.
As shown in FIG. 12, the NDT device for pipeline also comprises a data processing unit, a first signal conditioning unit and a second signal conditioning unit. The testing probe 24 comprises an excitation coil and a receiving coil with mutual inductance, and also includes a passive resonance coil which is located between the excitation coil and the receiving coil. The data processing unit, the first signal conditioning unit and the excitation coil are connected in sequence, and the receiving coil, the second signal conditioning unit and the data processing unit are connected in sequence.
Wherein the data processing unit is used for generating an excitation signal to the first signal conditioning unit and receiving testing information fed back by the second signal conditioning unit, and also used for MPU calibration, RTC timing, etc. As an option, the data processing unit in this example is specifically an FPGA, featuring strong data processing capability and low cost.
In this embodiment, an eddy current testing system is formed by the data processing unit, the first signal conditioning unit, the second signal conditioning unit and the testing probe 24 without additional magnetizing treatment devices, thus greatly reducing the volume of the system. The cleanliness requirement for the inside of the pipeline is greatly reduced due to the certain lift-off testing capacity of the testing probe. In addition, based on the high integration of the testing probe, the NDT device for pipeline provided by the invention not only improves the flexibility of the device through the pipeline, but also greatly reduces the system cost. Further, the excitation coil generates a primary magnetic field under the action of the excitation signal and is mutually induced with the receiving coil so that the energy of the excitation coil is wirelessly transmitted to the receiving coil. By introducing the passive resonance coil between the excitation coil and the receiving coil, the coupling between the excitation coil and the receiving coil can be enhanced, thereby significantly improving the energy transmission efficiency between the transmitting coil and the receiving coil, further improving the sensitivity of the testing probe 24 so that the probe can accurately test pipeline defects at a higher lift-off height, and improving the defect detection capability of the testing probe 24.

In some other embodiments, as shown in FIG. 1, FIG. 8 and FIG. 9, when the mobile carrier 1 moves under the action of fluid, the structure of the mobile carrier 1 may include cylindrical capsule 11 and sealing rubber cup 5. The probe testing assembly 2 is installed on the cylindrical capsule 11, and in this case, the outline of the cylindrical capsule 11 may be set as a cylindrical structure with an accommodating cavity inside, to facilitate the installation of related electronic devices and make the overall structure more compact and reasonable. The structure of the sealing rubber cup 5 is similar to that of a bowl, with the outer diameter generally 3-6% larger than the inner diameter of the pipeline. The sealing end of the sealing rubber cup 5 is in the same direction as the testing element of the probe testing assembly 2, and both of them deviate from the moving direction of the mobile carrier 1. In addition, the sealing rubber cup 5 and the inner pipe wall form a certain interference and fit with each other tightly. At this time, the mobile carrier 1 automatically advances in the pipeline under the pressure difference between both sides of the sealing rubber cup 5. Wherein, the sealing rubber cup 5 is preferentially installed in front of the probe testing assembly 2, so that the edge of the sealing rubber cup 5 is attached to the inner pipe wall when the mobile carrier 1 advances, and that the sealing rubber cup 5 can clean the inner pipe wall while the mobile carrier 1 advances, enabling the testing probe 24 to test the inner pipe wall more accurately. Multiple sealing rubber cups 5 can be provided. In this case, at least one sealing rubber cup 5 is located in front of the probe testing assembly 2. With the cooperation of multiple sealing rubber cups 5, it is possible to prevent the risk that the device cannot advance due to air leakage after one sealing rubber cup 5 is deformed. Meanwhile, the data processing unit, the first signal conditioning unit and the second signal conditioning unit can all be installed in the cylindrical capsule 11, in which there is also a battery module 12 which supplies power to the testing probe 24, the data processing unit, the first signal conditioning unit and the second signal conditioning unit.

The head of said mobile carrier 1 is also provided with a bumper board 4 made of rubber material, which not only avoids the damage to the cylindrical capsule 11 caused by the direct impact of the invention on the elbow of the pipeline during high-speed advancement of the invention but also avoids the damage to the data processing unit, the first signal conditioning unit, the second signal conditioning unit and the battery module 12 in the cylindrical capsule 11 caused by excessive shock during the impact process.

If there are two groups of sealing rubber cups 5 and probe testing assemblies 2, one group of sealing rubber cups 5 and probe testing assemblies 2 are tightly installed on the cylindrical capsule 11 by flanges and bolt 8, while the other group of sealing rubber cups 5 and probe testing assemblies 2 are also tightly installed at the rear end of the cylindrical capsule 11 by flanges and bolt 8. To provide a certain movable space for probe testing assembly 2 at the rear side of sealing rubber cup 5, a spacer ring 9 can also be provided between probe testing assembly 2 and the adjacent sealing rubber cup 5.

In some other embodiments, as shown in FIG. 1 and FIG. 2, there are at least two groups of probe testing assemblies 2, each of which is sequentially arranged on the outer side of the mobile carrier 1 along the axis of the mobile carrier 1, and provided with multiple testing components inside. The testing components in the adjacent two groups of probe testing assemblies are arranged in a staggered manner, so that the pipe walls in the circumferential direction can be covered by the total range of testing contributed by the testing probes 24 on said multiple testing components. In this way, the multiple testing probes 24 can cooperate in jointly completing the testing of the entire inner pipe wall when the mobile carrier 1 is advancing, thus ensuring comprehensive testing.

The testing element is an elastic testing element 23, so that each testing component in the probe testing assembly 2 tests the inner pipe wall through its elastic testing element 23. The elastic motion direction of the elastic testing element 23 is in the radial direction of the pipeline, thus enabling each elastic testing element 23 to be propped against the inner pipe wall when testing the inner pipe wall, effectively contacting the inner pipe wall through the elasticity of the elastic testing element 23 during movement testing, and providing a relatively stable supporting force, thereby improving signal quality and the testing accuracy while achieving the sealing and good water pressure resistance of the probe.

Here, it should be explained that in the case of propping of the elastic testing element 23 against the inner pipe wall, "propping" includes surface propping and line propping, depending on the testing mode or testing object of the carried testing probe 24.

In some other embodiments, the elastic testing element 23 is made of elastic material, and the testing probe 24 is wrapped with the elastic material, so that the elastic testing element 23 has elasticity and can move radially, resulting in a possible gap between two adjacent elastic testing elements 23 in the same probe testing assembly 2 in a natural state or under small stress. As a result, the entire circumference cannot be covered; in other words, the total range of testing contributed by the elastic testing probes 24 in one group of probe testing assemblies 2 cannot completely cover the pipe wall in the circumferential direction. Therefore, by arranging at least two groups of probe testing assemblies 2, sequentially arranging the testing components of each group of probe testing assemblies on the outer side of the mobile carrier 1 along the axis of the mobile carrier 1, and arranging the elastic testing elements 23 on the adjacent two groups of probe testing assemblies in a staggered manner, the two groups of probe testing assemblies can cooperate so that the pipe walls in the circumferential direction can be covered by the total range of testing contributed by the elastic testing elements 23, thus realizing 360° complete testing of the inner pipe wall, making the testing more comprehensive and effective.

The purpose of the staggered arrangement of more than two groups of probe testing assemblies 2 is mainly to make the range of testing contributed by each elastic testing element 23 cover the entire circumference and provide a certain overlap width. Taking the surface propping as an example, if the width of the propped contact surface, i.e., the width of the testing coverage surface provided by a single testing probe 24 is W, the number of elastic testing elements 23 arranged is n, and the inner diameter of the pipeline is D1, the relation will be

$$N_1 = \frac{\pi \times D_1}{W}$$ . After N1 is calculated, the result is rounded up to an even number to obtain the number of probes to be arranged (n), and the number of probes to be arranged at the front and rear ends are n/2.

In this way, the entire circumference can be covered by two groups of probe testing assemblies. In addition, the above relation shall be satisfied if three or more groups of N are arranged. In other words, after N1 is calculated, the result is rounded up to an integer to obtain the number of probes to be arranged (n), and n/N probes shall be arranged in a staggered manner in the front and rear groups respectively.

In some specific embodiments, the elastic material for the elastic testing element 23 is rubber material or polyurethane material with high elasticity and toughness, and rubber material is preferably used as the elastic material for the embodiments.

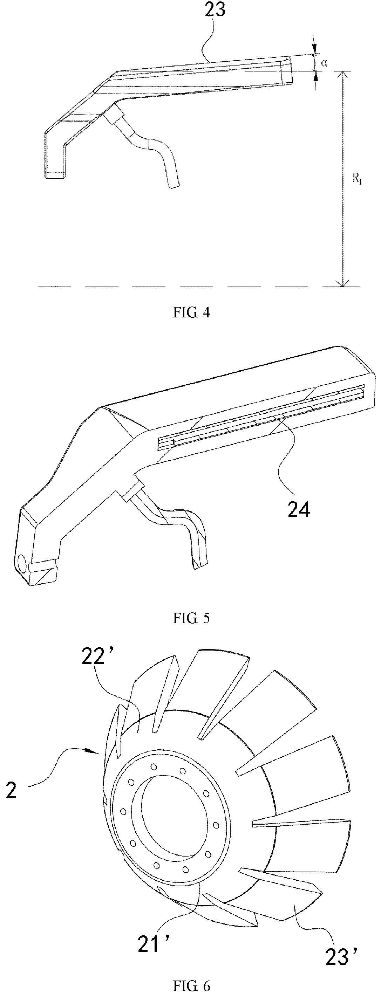

In some specific embodiments, as shown in FIG. 3 and FIG. 4, a contact surface for testing is formed at one side of the elastic testing element 23 that is propped against the inner pipe wall. Once the elastic testing element 23 is propped against the inner pipe wall, said contact surface for testing can be attached to the inner pipe wall. During testing, the elastic testing element 23 is propped against and attached to the inner pipe wall through said contact surface for testing, and the size of said contact surface for testing is consistent with the testing range of the testing probe 24, so that the testing can be performed better. Wherein, the attachment can be understood as the match between said contact surface for testing and the shape of the inner pipe wall, i.e., they can be matched after attachment.

It can be understood that since the elastic testing element 23 is elastic and its contact surface for testing should be attached to the pipe wall during testing, i.e. when the elastic testing element 23 is in a natural state or an unstressed state, said contact surface for testing or the elastic testing element 23 is not parallel to the axis of the mobile carrier 1 and there is a certainly included angle α (preferably within the range of 3°-7°, depending on the elastic material to be used), the diameter of the testing element of the probe testing assembly 2 larger than the diameter of the inner pipe wall before testing can be changed to a diameter equal to the diameter of the inner pipe wall during testing, and at the same time, said testing element can be attached to the inner pipe wall.

As shown in FIG. 1 to FIG. 5, the probe testing assembly 2 provided in this embodiment can be of a split structure, i.e., the probe testing assembly 2 comprises multiple testing components arranged around the axis of the mobile carrier 1. In this case, the testing components are generally made of elastic material, and comprise a connector 21 and an elastic testing element 23. The testing probe 24 is installed in the elastic testing element 23, and the elastic testing element 23 can move radially around the connector 21 under its elastic action. In this way, the testing component is directly installed on the mobile carrier 1 through the connector 21 when installed, the extended end of the elastic testing element 23 forms a free end relative to the connector 21, and the free end can move radially around the connector 21 under its elastic action when being squeezed by the pipe wall during testing, thereby ensuring a good fit between the probe and the pipe wall, providing sufficient supporting force to prevent the testing probe 24 from shaking during testing and thus make it more stable.

Specifically, as shown in FIG. 3, the connector 21 is provided with a positioning hole used to position said connector on the mobile carrier 1 and a connecting hole used to fix said connector on the mobile carrier 1 by fasteners or other connecting structures after positioning by the positioning hole. Of course, other existing mounting structures can also be used without restrictions.

To better construct the testing component and make the constructed testing component be attached to the inner pipe wall, a transition section 22 is provided between the connector 21 and the elastic testing element 23 as shown in FIG. 2 to FIG. 4, and the connector 21 is vertically connected to the mobile carrier 1, so that the transition section 22 can play a transitional connecting role, thus enabling the elastic testing element 23 to be attached onto the inner pipe wall through small-angle elastic deformation (e.g., an angle within 5°).

If the probe testing assembly 2 is of a split structure, the probe testing assembly 2 can be integrally molded by a mold directly, and the testing probe 24, which is an NDT testing probe 24, is directly encapsulated in the probe testing assembly 2 during the molding process.

Furthermore, set $$R_1 = \frac{D_1}{2}$$ , where R1 is the radius of the inner end of the elastic testing element 23, D1 is the inner diameter of the pipeline, R2 is the radius of the outer end of the elastic testing element 23, and R2 is slightly larger than R1. With the installation position of the testing probe 24 determined, the probe testing assembly 2 is subject to compressive deformation on the inner pipe wall, so that the angle α becomes close to 0°, thus ensuring that the testing probe 24 is attached onto the pipe wall.

As shown in FIG. 6 to FIG. 8, the probe testing assembly 2 provided in this embodiment can be of an integral structure and can be molded by a mold at one time in the production process. In this case, the probe testing assembly 2 comprises an annular connector 21' and multiple testing components which are elastic testing elements 23 distributed at intervals along the circumferential direction of the annular connector 21', and the testing probes 24 are encapsulated in the testing components. The elastic testing elements 23' can move radially around the annular connector 21' under their elastic action. Meanwhile, the probe testing assembly 2 can be generally made of elastic material, and the molded probe testing assembly 2 can be directly sleeved on the mobile carrier 1 through the annular connector 21' during installation, making it more convenient for the integral installation of the probe testing assembly 2.

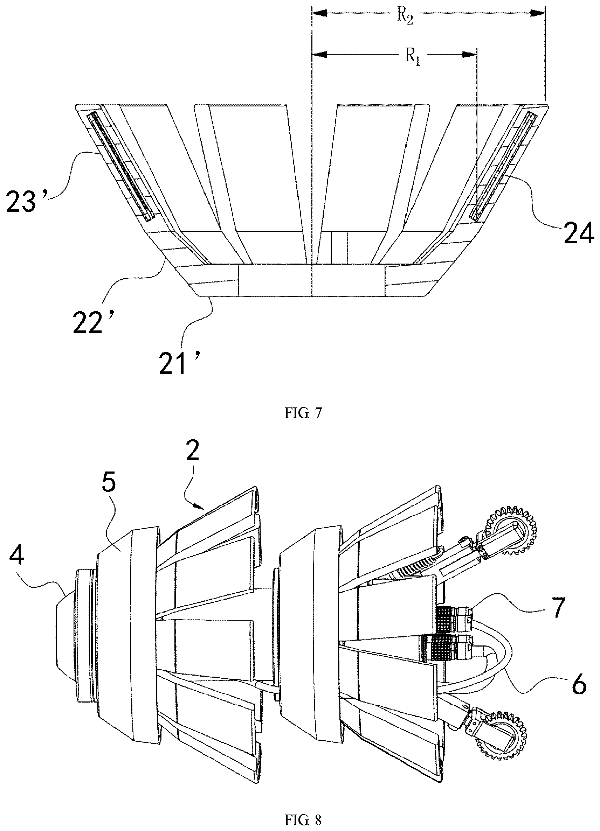

When the probe testing assembly 2 with integral structure is installed, the annular connector 21' is vertically connected with the mobile carrier 1, and a transition section 22' can be arranged between the annular connector 21' and the elastic testing element 23', as shown in FIG. 7. At this time, the transition section 22' can play a transitional connecting role, so that the elastic testing element 23' can be attached to the inner wall of the pipeline through elastic deformation within 5° at a small angle.

When there are two groups of probe testing assemblies 2 with integral structure, the elastic testing element 23' of the two groups of probe testing assemblies 2 have a certain angular difference in the circumferential direction, so that the testing probe 24 can be fully covered in the circumferential direction. For example, if one group of probe testing assembly 2 has N flexible testing elements 23' uniformly distributed along the circumferential direction, the angular difference between the front and rear groups of probe testing assemblies 2 is $r = \dfrac{360^\circ}{2N}$ ;

the angle is designed as $R_1 = \dfrac{D_1}{2}$ , where D1 is the inner diameter of the pipe, R1 is the radius of the inner end of the elastic testing element 23', R2 is the radius of the inner end of the elastic testing element 23', and R2 is slightly larger than R1, so that the elastic testing element 23' is basically flush with the inner wall of the pipe after being squeezed by the inner wall.

In some other embodiments, the first signal conditioning unit includes a digital-to-analog conversion module and a first signal amplification module connected in sequence; and the second signal conditioning unit comprises a second signal amplification module and an analog-to-digital conversion module connected in sequence. More specifically, the digital-to-analog conversion module is of an ADC chip; The first signal amplification module is specifically a power amplifier; The second signal conditioning unit comprises a power supply voltage regulating chip for providing 5V operating voltage and a power supply voltage regulating chip for providing 3.3V operating voltage, an operational amplifier for amplifying signals and a standard voltage chip for providing 4.096V voltage. The 4.096V voltage is divided into 2.048V voltage, which is supplied to the operational amplifier and then output to the ADC chip (analog-to-digital conversion module) after differential amplification. The ADC acquisition chip is a 16-bit, 1MSPS, true-differential input, digital-to-analog converter, and provides SPI interface to output the acquired testing data to the data processing unit. It also comprises a 4-bit dual power transceiver and supports bidirectional level conversion. The signal converted by ADC and the clock provided by the data processing unit allows a stronger circuit against interference through the chip. As an option, the signal conditioning unit further comprises a filtering module, which is connected with the signal amplification module and used for filtering a clutter signal.

In some other embodiments, the NDT device for pipeline further comprises a management control unit and a host computer which are bidirectionally connected with the data processing unit, wherein the management control unit is connected to the host computer while the host computer is connected to the server. Specifically, the management control unit is used for self-inspection of the testing probe 24, IMU self-inspection, configuration management, data file management, etc., wherein the self-inspection of the testing probe 24 performs start-stop control and real-time data viewing; configuration management is used to test parameter configuration, RTC timing and parameter configuration for local storage of equipment; data file management is mainly used for data file reading and conversion. Further, the host computer is equipped with data acquisition management software, the data processing unit transmits the testing information (data) fed back by the second signal conditioning unit to the management control unit for storage, and the management control unit further transmits the feedback information to the host computer via the data management software, or the management control unit transmits the feedback information to the data management software of the host computer via the wireless communication module. The testing information is analyzed through the data management software integrated into the host computer, to judge whether the defects occur in the pipelines and to locate the defective pipelines. The host computer transmits the data analysis results to a server at the same time, thus realizing data storage and sharing.

The geometric centers of the excitation coil, the passive resonance coil and the receiving coil are collinear, i.e., the excitation coil, the passive resonance coil and the receiving coil are arranged coaxially, improving the energy transmission efficiency to the maximum extent.

In some other embodiments, the excitation coil, the passive resonance coil and the receiving coil are of rectangular coils spirally wound with copper wire, in which the defects are more easily to be identified compared with others in the circular structure.

In some other embodiments, the excitation coil is a differential coil, and the passive resonance coil and the receiving coil are absolute coils. The differential coil can form a uniform eddy current in the central area of the coil, and can generate obvious eddy current change in the middle eddy current area when defects are detected, thus changing the magnetic field and facilitating the identification of defective parts.

In some other embodiments, the excitation coil, the passive resonance coil and the receiving coil are PCB planar coils or FPC planar coils, which are characterized by small size and high sensitivity to surface defects; they have high sensitivity to defects due to the small effective lift-off, and broad prospects in the field of eddy current testing. Further, the PCB planar coil can be directly manufactured and permanently fixed on the moving component. In addition, the FPC planar coil is flexible enough, allowing consistency of the coil with the pipe surface to be detected, so the testing probe 24 also has a very broad prospect in testing complex surface geometry.

In some other embodiments, the excitation coil comprises two symmetrically arranged rectangular field coils to generate more uniform eddy currents under the action of excitation signals.

In some other embodiments, as shown in FIG. 13, the excitation coil of the invention is a single-layer PCB rectangular differential coil with a length of a1 and a width of b1, a wire diameter in the intermediate differential area of d11, a wire diameter of rest wires of d12, a wire spacing of d13, and d11> d12. In this embodiment, the wire diameters in the differential area range from 0.500 to 0.510mm, the diameters of the rest wires range from 0.250 to 0.260mm, the wire spacing ranges from 0.250 to 0.260mm, and the whole excitation coil length ranges from 56.630 to 56.640mm and width ranges from 30.520 to 30.530mm. More specifically, the excitation coil is provided with an input interface input1 and an output interface output1 for an external excitation signal.

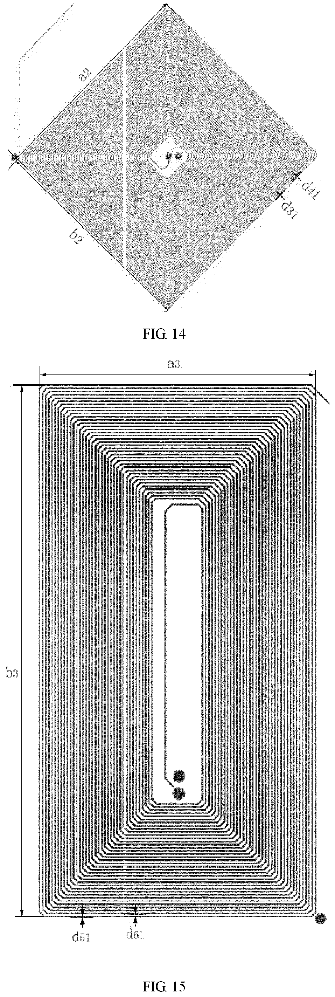

In some other embodiments, the passive resonance coil comprises multiple PCB resonance sub-coils which are connected in series and arranged in layers. As a preferred embodiment, the testing probe 24 comprises four layers of passive resonance coils. As shown in FIG. 14, the passive resonance coil has a length of a2 and a width of b2, a copper wire diameter of d31 and a wire spacing of d41. More specifically, via holes are arranged between different passive resonance coils, and passive resonance coils between different layers are connected in series through copper wires. In this embodiment, the PCB rectangular resonance coil of each layer has a wire diameter ranging from 0.0880 to 0.0890 mm, a wire spacing ranging from 0.0880 to 0.0890 mm, a length ranging from 29.440 to 29.450 mm, and a width ranging from 29.440 to 29.450 mm.

In some other embodiments, the receiving coil comprises a plurality of PCB receiving sub-coils which are connected in series and arranged in layers. As a preferred embodiment, the testing probe 24 comprises four layers of receiving sub-coils. As shown in FIG. 15, the receiving sub-coils have a length of a3 and a width of b3, a copper wire diameter of d51 and a wire spacing of d61. Via holes are formed between the receiving sub-coils in different layers, and the receiving sub-coils between different layers are connected in series through copper wires. In the Embodiment, the PCB rectangular receiving sub-coil of each layer has a wire diameter ranging from 0.0880 mm to 0.0890 mm, a wire spacing ranging from 0.0880 mm to 0.0890 mm, a length ranging from 10.430 mm to 10.440 mm, and a width ranging from 24.750 mm to 24.760 mm. More specifically, the input interface input2 is arranged on the first layer, and the output interface output2 is arranged on the fourth layer. The back-end data processing unit is connected through two interfaces.

As a preferred embodiment, the testing probe 24 of the invention comprises an excitation coil, four layers of resonance sub-coils, and four layers of receiving sub-coils. The whole probe is small in size and convenient to install. For the invention, under the action of the resonance coil, the receiving coil arranged in a multilayered structure can improve the inductance value of the coil, etc., and further can better induce the change in the magnetic flux of the pipeline to be tested, thus improving the testing sensitivity, reducing the optimal testing frequency, and effectively reducing the requirements on excitation signal. Further, a multi-coil array created by a plurality of resonance sub-coils and receiving sub-coils can increase the testing range and reduce the testing time.

In some other embodiments, bending positions of the excitation coil, the passive resonance coil, and the receiving coil are all chamfered at 45° to reduce electromagnetic interference and signal emission, and reducing the signal noise when the external signal frequency is high.

In some other embodiments, the passive resonance coil is connected with a capacitor in series, which is connected with the capacitor via a wire on the left side of the coil. When the passive resonance coil comprises a plurality of resonance sub-coils, one resonance sub-coil is connected in series with a resonance point regulating capacitor, and two via holes are specifically formed outside the resonance sub-coil to place the capacitor. The resonance point of the coil can be adjusted by the capacitance of the capacitor, thereby improving the interference rejection of the testing probe 24 to be suitable for a wider testing environment.

To further illustrate the inventive concept, the testing principle is described as follows:
The NDT device for pipeline is arranged on the mobile carrier 1 and placed in a conductive pipeline to be tested, and the invention starts to work after being powered on. The data processing unit FPGA generates a sine wave excitation signal through a first digital-to-analog conversion module DAC by a DDS method, and the sine wave excitation signal is amplified to 6V by a power amplifier and applied to the excitation coil; the excitation coil is driven by the excitation signal to generate a primary magnetic field, and a passive resonance coil enhances the coupling between the excitation coil and the receiving coil and the tested pipeline. When the tested specimen (tested pipeline) is in the primary magnetic field, the primary magnetic field generates eddy current on the surface of the tested specimen and the flow direction of the eddy current changes at the defect. A secondary magnetic field generated by the eddy current changes due to a change in the eddy current. Changes in the amplitude and phase of the receiving coil are detected by detecting a change in the magnetic flux of the receiving coil. Therefore, the induced voltage generated by the received primary magnetic field and the induced voltage generated by the secondary magnetic field (feedback testing signal) are amplified by the operational amplifier, converted into digital signals recognizable by the data processing unit FPGA through the ADC, and then transmitted to the data processing unit. The data processing unit transmits the feedback testing signal to the host computer. The host computer extracts the amplitude and phase value of the testing signal, obtains the change in the amplitude and phase of the testing signal, and accurately detects the relevant defect information of the tested specimen and the positions of defective pipelines in combination with the coded signal fed back by the encoder.

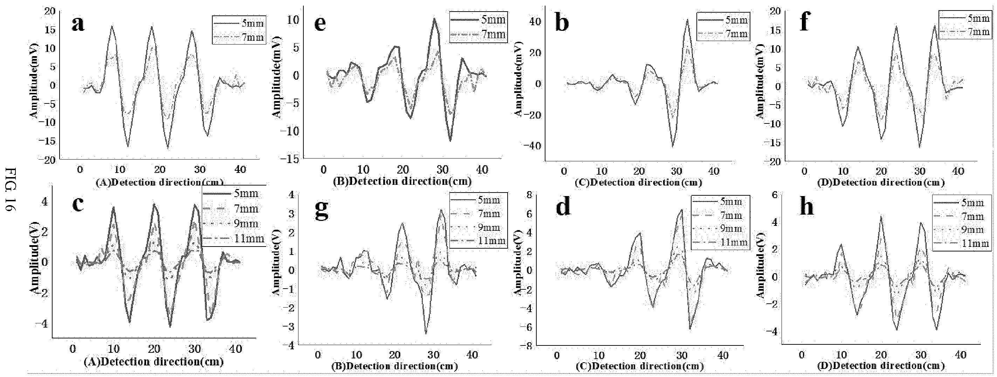

To further illustrate the technical effect of the application, a concrete testing effect diagram of the resonance coil introduced for the testing probe 24 of the application is given. Wherein FIG. 16 is a diagram showing the comparison of the testing effects before and after a passive resonance coil is provided in the application, wherein FIGs. 16 (a) and (c) are mutually referenced, FIGs. 16 (e) and (g) are mutually referenced, FIGs. 16 (b) and (d) are mutually referenced, FIGs. 16 (f) and (h) are mutually referenced, FIGs. 16 (a)-(d) are testing diagrams after the passive resonance coil is provided, and FIGs. 16 (e)-(h) are testing diagrams after the passive resonance coil is not provided. In the Figures, the horizontal coordinates indicate the testing direction in cm, and the vertical coordinates indicate the amplitude in V. It can be clearly seen from FIG.16 that under the same lift-off condition, The amplitude of the testing probe 24 with the passive resonance coil provided changes more than that without the passive resonance coil provided, and the maximum lift-off value of the testing probe 24 with the passive resonance coil provided is higher than that of the testing probe 24 without the passive resonance coil provided, which has more excellent testing performance.

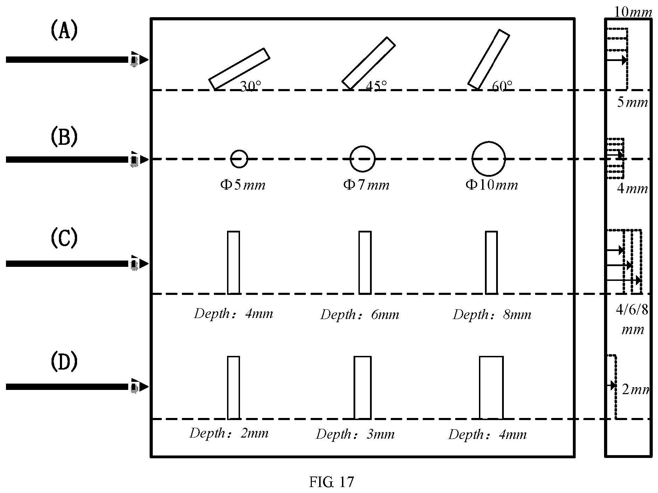

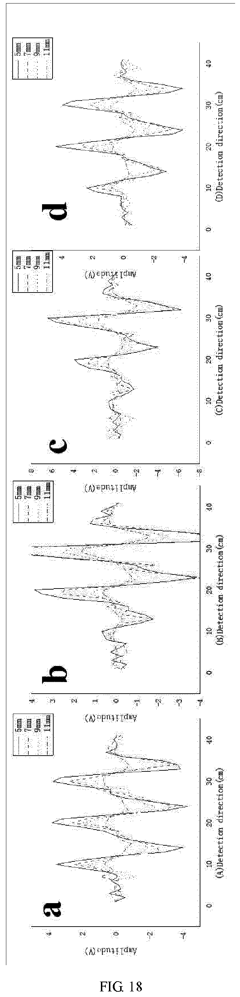

Further, the length, width, and thickness of the artificial defect sample in the application are 450 mm, 300 mm, and 10 mm respectively. FIG. 17 shows various surface defects except for circular defects in samples with a thickness of 10mm, a length of 20mm and a width of 2mm, and defects with a width of 3mm and 4mm as shown in FIG. 18, of which three defects have the depth of 5mm and the inclination angles of 30°, 45° and 60° respectively. Three different circular defects have a depth of 4 mm and a respective diameter of 5 mm, 7 mm, and 10 mm; three rectangular defects have different depths, which are 4 mm, 6 mm, and 8 mm respectively; and three rectangular defects with a depth of 2 mm have different widths of 2 mm, 3 mm and 4 mm, respectively.

FIGs. 18 (a)-18 (d) are diagrams showing the testing results of ferromagnetic plate defects with different types and sizes by using the testing probe 24 of the invention under the condition of 5 mm lift-off and a moving speed of 10 mm/s, wherein FIG. 18 (a) is a diagram showing the testing results of defects with different inclination angles under the condition of 5 mm lift-off; FIG. 18 (b) is a diagram showing the testing results of circular defects with different sizes under the condition of 5 mm lift-off; FIG. 18 (c) is a diagram showing the testing results of defects with different sizes and depths under the condition of 5 mm lift-off; FIG. 18 (d) is a diagram showing the testing results of defects with different scales and widths under the condition of 5 mm lift-off. The horizontal coordinates of FIG. 18 indicate the testing direction in cm, and the vertical coordinates indicate the amplitude in V. When the testing probe 24 passes through the defect-free position, the testing signal amplitude keeps unchanged; and when the testing probe 24 passes through the defect position, the testing signal amplitude changes and the changed amplitude and time are related to the size of the defect. In this experiment, when the area of the defect becomes larger or the depth becomes deeper, the signal change amplitude becomes larger and the signal change time is longer.

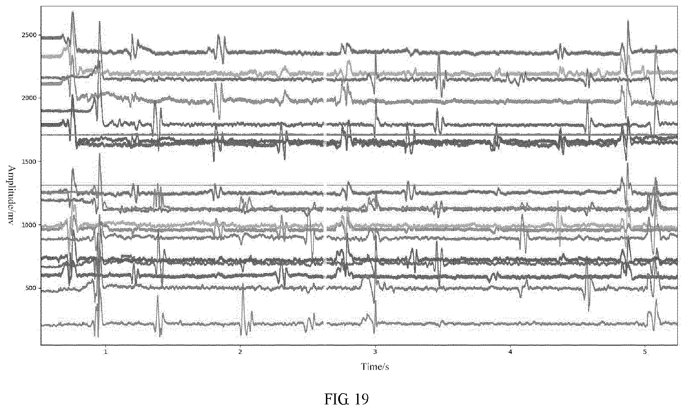

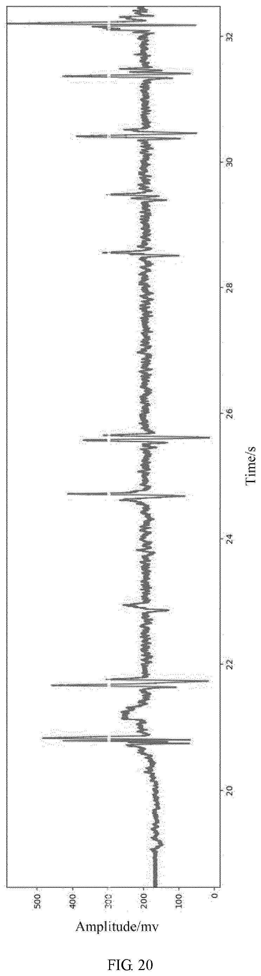

FIG. 19 is an overall testing result of X80 steel pipeline defects by using the testing probe 24 of the invention, wherein, the abscissa indicates the time (s) for the testing probe 24 to move at 0.5m/s, and the ordinate indicates the defect amplitude (mv). FIG. 20 is the testing result of a single testing probe 24 for X80 steel pipeline defects by using the testing probe 24 of the invention, wherein, the abscissa indicates the time (s) for the testing probe 24 to move at 0.5m/s, and the ordinate indicates the testing amplitude (mv). It can be clearly seen from the figure that the testing probe 24 of the invention has a good testing result for pipeline defects.

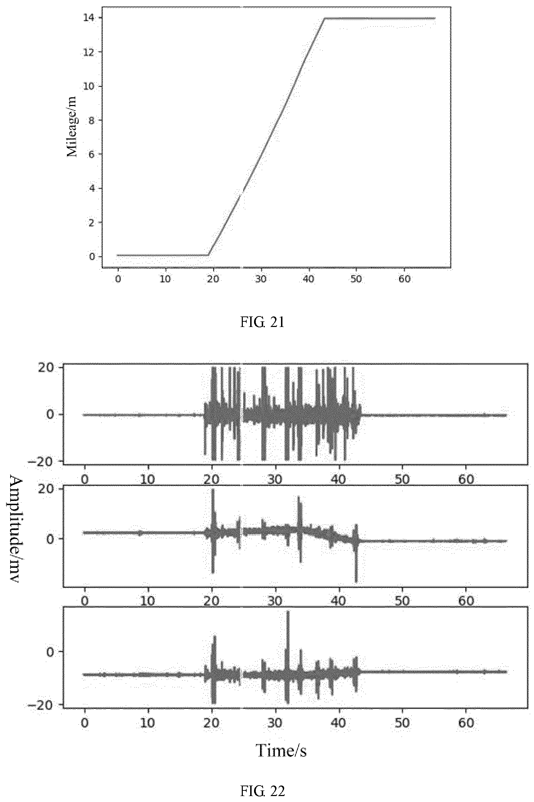

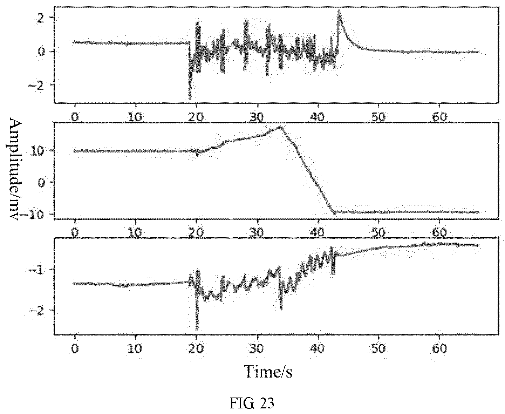

FIG. 22 is a schematic diagram of acceleration testing results of the pipeline cleaner; FIG. 23 is a schematic diagram of Euler angle test results of the pipeline cleaner; In FIGs 21-23, the abscissa indicates the time (s) for the testing probe 24 to move at 0.5m/s, and the ordinate indicates the testing amplitude (mv).

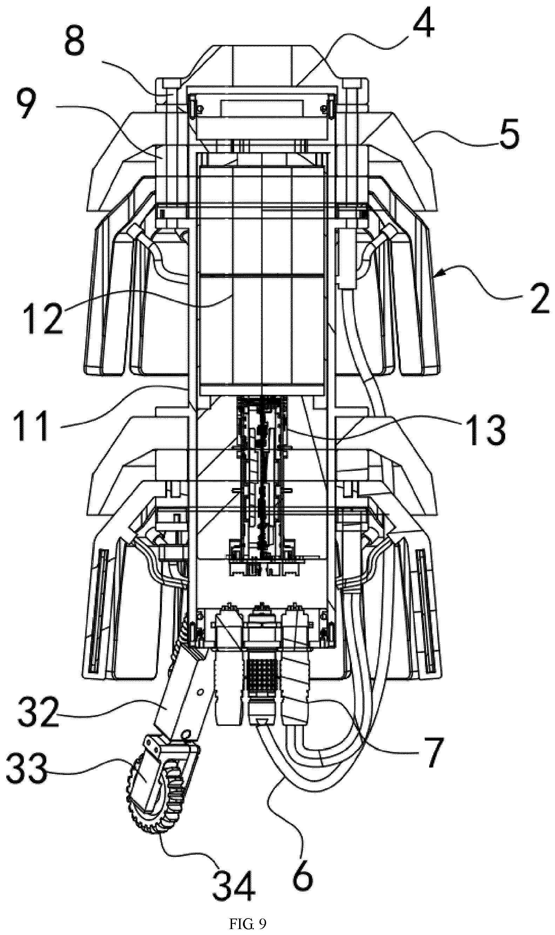

As shown in FIGs. 9 - 11, the mobile carrier 1 is also provided with a mileage testing assembly 3 that is used to acquire mileage data, and the mileage testing assembly 3 comprises a supporting rod 32, wheel support 33, an odometer wheel 34 and a mileage detector 38. The supporting rod 32 is installed on the mobile carrier 1 and swings up and down; the wheel support 33 is installed on the supporting rod 32 and swings left and right; the odometer wheel 34 is installed rotatably on the wheel support 33, allowing the mileage testing assembly 3 to swing in four directions on the mobile carrier 1. When the invention advances in the pipeline, the wheel surface of the odometer wheel 34 is pressed against the inner wall of the pipeline. By the friction between the wheel surface of the odometer wheel 34 and the inner wall of the pipeline, the odometer wheel 34 rotates while the invention advances. The mileage detector (38) is installed on the wheel support (33) to acquire mileage data by the number of revolutions of the odometer wheel (34), and the output end of the mileage detector 38 is connected with the data processing unit. Specifically, the mileage detector 38 is an encoder for collecting mileage information of the mobile carrier 1 and feeding it back to the data processing unit, wherein FIG. 21 is a testing diagram of an odometer wheel; FIG. 22 is a schematic diagram showing the acceleration testing results of a pipeline cleaner.

In some other embodiments, a sealing end cap 37 is arranged at one end of the wheel support 33 close to the sensor, a cavity is formed between the sealing end cap 37 and the wheel support 33, and the mileage detector 38 is placed inside said cavity. When the odometer wheel 34 rotates, the mileage detector 38 generates pulse signals, which are transmitted to the data processing unit and recorded by the management control unit after being processed by the data processing unit, thereby calculating the running mileage of the equipment.

In some other embodiments, a spring 35 is also provided and connected between the supporting rod 32 and the mobile carrier 1, and the spring 35 is a tension spring. Under the action of spring 35, the supporting rod 32 moves radially, so that the wheel surface of the odometer wheel 34 is pressed against the inner wall of the pipeline, which effectively increases the resistance between the wheel surface of the odometer wheel 34 and the inner wall of the pipeline, thus ensuring that the odometer wheel 34 rotates when the invention advances, and making the testing of the mileage detector 38 more accurate.

In some other embodiments, the mobile carrier 1 is also provided with a mounting seat 31, which is fixed on the outer wall of the mobile carrier 1, and the supporting rod 32 is connected by the hinge on the mounting seat 31, so that the supporting rod 32 is not directly connected with the mobile carrier 1, which effectively prevents the supporting rod 32 from directly acting on the mobile carrier 1 when it is subjected to external force, thus effectively protecting the mobile carrier 1.

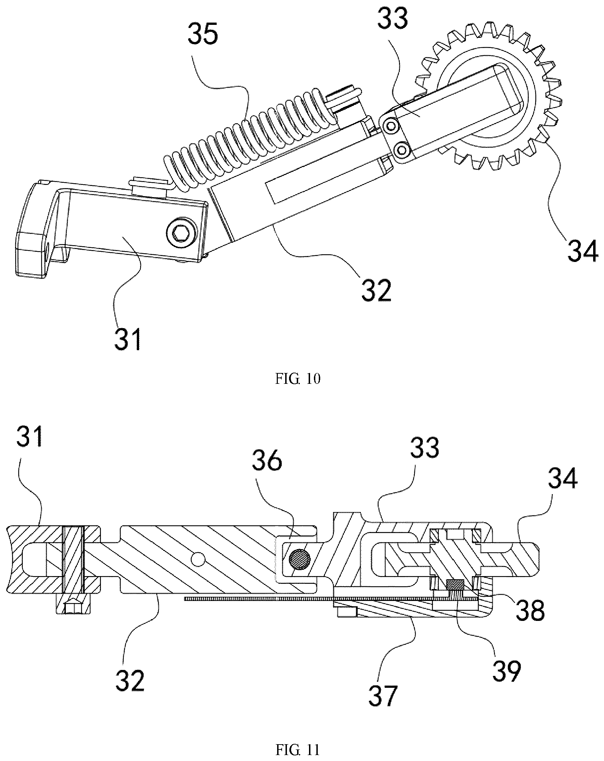

As shown in FIG. 11, an open slot 36 is formed at the connection between said supporting rod 32 and the wheel support 33, and a swing connecting shaft is arranged within the open slot 36, the axial direction of which is perpendicular to the axial direction of the hinge shaft when the supporting rod 32 is installed by hinge, and the wheel support 33 is installed by hinge in the open slot 36 through the swing connecting shaft so that the wheel support 33 can swing in the open slot 36 and the mileage testing assembly 3 is of a simpler structure.

In some other embodiments, the open slot 36 is formed on the end face of the supporting rod 32 and is in a rectangular shape, which ensures that while the wheel support 33 can swing against the supporting rod 32, the swing amplitude of the wheel support 33 against the supporting rod 32 can be limited, to avoid jamming when the device passes through the pipe elbow, and swing in a small range can improve the accuracy of odometer wheel 34.

In some other embodiments, there are multiple mileage testing assemblies 3 that are spaced circumferentially along with the mobile carrier 1, which effectively avoids the slipping of the odometer wheel 34 and inaccurate mileage recording, and allows mutual calibration among multiple mileage testings, thereby solving the problem of slipping off the odometer wheel 34 and inaccurate mileage recording.

The odometer wheel 34 mounted on the wheel support 33 can be displayed in the upper, lower, left, and right directions, through the cooperation of the supporting rod 32 and the wheel support 33. When the invention is used, the supporting rod 32 can swing outwards under the action of the spring 35, so that the wheel support 33 swings synchronously, and the odometer wheel 34 mounted on the wheel support 33 is pressed against the inner wall of the pipeline. When the NDT device for pipeline rotates in the forward process, the wheel support 33 swings against the supporting rod 32, so that the odometer wheel 34 on the wheel support 33 can swing along with the wheel support 34 to a certain extent, effectively preventing the odometer wheel 34 from being subjected to torsional force when the NDT device for pipeline rotates, thus making the odometer wheel 34 always press against the inner wall of the pipeline, avoiding the odometer wheel 34 from slipping, and greatly improving the testing accuracy of the mileage detector.

To improve the pressure resistance and waterproofness of the invention, all the electrical components in the cylindrical capsule 11 are connected with the mileage detector 38 and the testing probe 24 through the pressure-resistant connecting wire 6 with the pressure-resistant connector 7, and the communication between the testing probe 24, the mileage detector 38 and the internal circuit hardware is realized through the pressure-resistant connecting wire 6, and the cylindrical capsule can work normally in a high water pressure environment without being short-circuited due to the inflow of water. In addition, the front and rear end covers of the cylindrical capsule 11 are respectively fitted with sealing rings, so that the whole capsule is sealed to protect the battery module 12 and circuit components.

When the invention is placed in the pipeline, the edge of the sealing rubber cup 5 will be attached to the inner wall of the pipeline and the cylindrical capsule 11 will be located in the center of the pipeline through the sealing rubber cup 5 to divide the pipeline into two parts; because of the elasticity of the probe testing assembly 2, when the invention is placed in the pipeline, the probe testing assembly 2 will be deformed, and the elastic testing element 23 of the probe testing assembly 2 will be attached to the inner wall of the pipeline, and by the elasticity of the spring 35, the supporting rod 32 moves radially under the action of the spring 35, so that the wheel surface of the odometer wheel 34 is pressed against the inner wall of the pipeline.

The fluid is sent into the pipeline, forming pressure difference on both sides of the sealing rubber cup 5 and moving the invention forward in the pipeline. While the invention moves forward, the testing probe 24 in the elastic testing element 23 starts to detect the inner wall of the pipeline, while the mileage detector 38 collects mileage information through the rotation of the odometer wheel 34, and the data processing unit FPGA of the testing probe 24 generates sine wave excitation signals through the first digital-to-analog conversion module DAC by DDS method. After being amplified by the power amplifier to 6V, it is applied to the excitation coil, which generates a primary magnetic field driven by the excitation signal. The passive resonance coil enhances the coupling between the excitation coil and the receiving coil and the pipeline to be tested. When the tested part (pipeline to be tested) is in the primary magnetic field, the primary magnetic field generates eddy current on the surface of the tested part and the flow direction of the eddy current changes at the defect. Because the eddy current changes, the secondary magnetic field generated by the eddy current changes. By detecting the change of the magnetic flux of the receiving coil, and then detecting the change of the amplitude and phase of the receiving coil, the received induced voltage generated by the primary magnetic field and the induced voltage generated by the secondary magnetic field (feedback testing signal) are amplified by the operational amplifier, and the digital signal which can be recognized by the data processing unit FPGA is converted by the ADC and transmitted to the data processing unit, which transmits the feedback testing signal to the host computer. The host computer extracts the amplitude and phase value of the testing signal, obtains the amplitude and phase change of the testing signal, and combines the coded signal fed back by the encoder to accurately detect the relevant defect information of the tested piece and the position of the corresponding defective pipeline.

The in-pipeline testing device provided by the invention has the following advantages:

1. The probe testing assembly has a good overall packaging effect, with the sealing performance of the probe guaranteed under the high-pressure environment (3-20Mpa) inside the pipeline;

2. The probe testing assembly is of high resiliency, and the testing probe has a good joint effect with the pipe wall without fatigue fracture;

3. The probe testing assembly is molded, so that the testing probes are accurately positioned inside and have good manufacturing consistency;

4. The probe testing assembly is packaged as a single part without other connecting or supporting parts; the parts falling off during the operation of the probe testing assembly in the pipeline are reduced;

5. The testing probe by adopting the passive resonance coil has high testing sensitivity and a higher lift-off value; integration of the testing probe with the mobile carrier and mileage testing assembly can improve the flexibility of the equipment in the pipeline.

6. The testing probe is packaged at the same time as the probe testing assembly is produced, and because the probe testing assembly is under injection molding, the distance between the testing probe and the outer surface of the elastic testing element can be controlled by the mold so that the proper size can be achieved, the lift-off value between the testing probe and the surface to be tested can meet the best requirements, and the testing probe signal can be optimized.

## Claims

1. A non-destructive testing (NDT) device for pipeline, comprising:

a mobile carrier (1), which moves with fluid in pipeline or is moved by an actuator;
a probe testing assembly (2), which includes a testing component installed on the mobile carrier (1) and having a testing element in which testing probe (24) is encapsulated;
wherein said testing element is of an elastic testing element (23), with a radial direction of pipeline as its elastic movement direction, so that each of the elastic testing elements (23) can be propped against the inner pipe wall during the testing;
wherein said mobile carrier (1) is also provided with a mileage testing assembly (3) that is used to acquire mileage data;
a data processing unit, a first signal conditioning unit and a second signal conditioning unit, wherein the testing probe (24) comprises an excitation coil, a receiving coil and a passive resonance coil between the excitation coil and the receiving coil;

wherein the geometrical centers of said excitation coil, passive resonance coil and receiving coil are collinear;

wherein said passive resonance coil is provided with multiple secondary resonance coils on PCB that are subject to serial connection and stratified layout; and said receiving coil is provided with multiple secondary receiving coils on PCB that are subject to serial connection and stratified layout;

the data processing unit is used to generate an excitation signal; the data processing unit, the first signal conditioning unit and the excitation coil are connected in sequence; and the receiving coil, the second signal conditioning unit, and the data processing unit are connected in sequence;

wherein said mileage testing assembly (3) is provided with a supporting rod (32), a wheel support (33), an odometer wheel (34) and a mileage detector (38); the supporting rod (32) is installed on the mobile carrier (1) and swings in the radial direction of the pipeline; the wheel support (33) is installed on the supporting rod (32) and swings in a direction perpendicular to the radial direction as well as an axial direction of the pipeline; the odometer wheel (34) is installed rotatably on the wheel support (33); the mileage detector (38) is installed on the wheel support (33) to acquire mileage data by the number of revolutions of the odometer wheel (34), and the output end of the mileage detector (38) is linked to the data processing unit;

wherein an open slot (36) is formed at the connection between said supporting rod (32) and the wheel support (33), and the wheel support (33) is installed by hinge into the open slot (36); wherein said open slot (36) is rectangular and formed on the end face of the supporting rod (32); wherein said mobile carrier (1) is also provided with a mounting seat (31) and said supporting rod (32) is connected by hinge on the mounting seat (31).

2. The NDT device for pipeline according to claim 1, wherein said mobile carrier (1) comprises a cylindrical capsule (11) and a sealing rubber cup (5); the sealing rubber cup (5) and the probe testing assembly (2) are both installed on the said cylindrical capsule (11), with sealing rubber cup (5) located on the front side of the probe testing assembly (2), and the sealing end of the sealing rubber cup (5) in the same orientation as the elastic testing element (23) of the probe testing assembly (2) but in an opposite direction to the movement of the mobile carrier (1);

wherein all of said data processing unit, first signal conditioning unit and second signal conditioning unit are installed inside the cylindrical capsule (11), and battery module (12) that is used to supply power for the data processing unit is also installed inside the cylindrical capsule (11).

3. The NDT device for pipeline according to claim 1, wherein bumper board (4) is also arranged at the head of said mobile carrier (1).

4. The NDT device for pipeline according to claim 1, wherein there are at least two sets of said probe testing assemblies (2), each of which is arranged in sequence on the outer side of the mobile carrier (1) and along the axis of the mobile carrier (1), and provided with multiple testing components inside; the pipe walls in a circumferential direction can be covered by the total range of testing contributed by testing probes (24) on said multiple testing components.

5. The NDT device for pipeline according to claim 1, wherein a contact surface for testing is formed at one side of the elastic testing element (23) that is propped against the inner pipe wall, and once the elastic testing element (23) is propped against the inner pipe wall, said contact surface for testing can be attached to the inner pipe wall.

6. The NDT device for pipeline according to claim 1, wherein said testing component is also provided with a connector (21) that is installed on the mobile carrier (1), and the elastic testing element (23) can move in the radial direction around said connector (21) under the elastic effect;

wherein said testing component is also provided with a transition section (22) that is located between the connector (21) and the elastic testing element (23), and the connector (21) is in a vertical connection with the mobile carrier (1).

7. The NDT device for pipeline according to claim 1, wherein said probe testing assembly (2) also comprises an annular connector (21'), and multiple testing components in the probe testing assembly (2) are spaced on the periphery of said annular connector (21'); the elastic testing element (23') can move in the radial direction around the annular connector (21') under the elastic effect, and the annular connector (21') is sleeved on the mobile carrier (1);

wherein said testing component is also provided with a transition section (22') that is located between the annular connector and the elastic testing element (23').

8. The NDT device for pipeline according to claim 1, wherein the first signal conditioning unit comprises a digital-to-analog conversion module and a first signal amplification module which are connected in sequence; and the second signal conditioning unit comprises a second signal amplification module and an analog-to-digital conversion module which are connected in sequence.

9. The NDT device for pipeline according to claim 1, further comprising a management control unit and/or a host computer in a two-way connection with the data processing unit.

10. The NDT device for pipeline according to claim 1, wherein said excitation coil is of a differential coil.

11. The NDT device for pipeline according to claim 1, wherein said excitation coil, passive resonance coil and receiving coil are of PCB planar coils.

12. The NDT device for pipeline according to claim 1, wherein said excitation coil is provided with two rectangular field coils subject to a symmetrical layout; wherein a resonance point regulating capacitor is connected in series with said passive resonance coil.

13. The NDT device for pipeline according to claim 1, wherein a sealing end cap (37) is arranged at one end of the wheel support (33) close to the sensor, a cavity is formed between the sealing end cap (37) and the wheel support (33), and the mileage detector (38) is placed inside said cavity.

14. The NDT device for pipeline according to claim 1, wherein a spring (35) is also provided and connected between said supporting rod (32) and the mobile carrier (1).

15. The NDT device for pipeline according to claim 1, wherein there are multiple mileage testing assemblies (3) that are spaced at a circumferential direction of the mobile carrier (1).

**Patentansprüche**

1. Ein zerstörungsfreies Prüfgerät (NDT-Gerät) für Rohrleitungen, umfassend:

einen beweglichen Träger (1), der sich mit dem Fluid in der Rohrleitung bewegen oder von einem Aktor bewegt werden kann; eine Sondenprüfanordnung (2), die eine Prüfkomponente umfasst, die am beweglichen Träger (1) angebracht ist und ein Prüfelement aufweist, in dem eine Prüfsonde (24) eingekapselt ist; wobei das Prüfelement ein elastisches Prüfelement (23) ist, mit einer Radialrichtung der Rohrleitung als seiner elastischen Bewegungsrichtung, so dass jedes der elastischen Prüfelemente (23) während des Prüfvorgangs gegen die innere Rohrwand gedrückt werden kann; wobei der bewegliche Träger (1) ferner mit einer Wegstreckenprüfanordnung (3) versehen ist, die dazu dient, Wegstreckendaten zu erfassen; eine Datenverarbeitungseinheit, eine erste Signalkonditionierungseinheit, und eine zweite Signalkonditionierungseinheit, wobei die Prüfsonde (24) eine Erregerspule, eine Empfangsspule, und eine passive Resonanzspule zwischen der Erregerspule und der Empfangsspule umfasst; wobei die geometrischen Mittelpunkte der Erregerspule, der passiven Resonanzspule, und der Empfangsspule kollinear sind; wobei die passive Resonanzspule mit mehreren sekundären Resonanzspulen auf einer Leiterplatte (PCB) versehen ist, die in Reihenschaltung und geschichteter Anordnung ausgeführt sind; und die Empfangsspule mit mehreren sekundären Empfangsspulen auf einer Leiterplatte (PCB) versehen ist, die in Reihenschaltung und geschichteter Anordnung ausgeführt sind; die Datenverarbeitungseinheit dient dazu, ein Erregersignal zu erzeugen; die Datenverarbeitungseinheit, die erste Signalkonditionierungseinheit und die Erregerspule sind in dieser Reihenfolge verbunden; und die Empfangsspule, die zweite Signalkonditionierungseinheit und die Datenverarbeitungseinheit sind in dieser Reihenfolge verbunden; wobei die Wegstreckenprüfanordnung (3) mit einer Stützstange (32), einer Radaufhängung (33), einem Wegstreckenrad (34) und einem Wegstreckendetektor (38) versehen ist; die Stützstange (32) am beweglichen Träger (1) angebracht ist und in der Radialrichtung der Rohrleitung schwenkbar ist; die Radaufhängung (33) an der Stützstange (32) angebracht ist und in einer Richtung senkrecht zur Radialrichtung sowie zur axialen Richtung der Rohrleitung schwenkbar ist; das Wegstreckenrad (34) drehbar an der Radaufhängung (33) angebracht ist; der Wegstreckendetektor (38) an der Radaufhängung (33) angebracht ist, um Wegstreckendaten durch die Anzahl der Umdrehungen des Wegstreckenrads (34) zu erfassen, und der Ausgang des Wegstreckendetektors (38) mit der Datenverarbeitungseinheit verbunden ist; wobei an der Verbindung zwischen der Stützstange (32) und der Radaufhängung (33) ein offener Schlitz (36) ausgebildet ist und die Radaufhängung (33) schwenkbar in den offenen Schlitz (36) eingebaut ist; wobei der offene Schlitz (36) rechteckig ist und auf der Stirnseite der Stützstange (32) ausgebildet ist; wobei der bewegliche Träger (1) ferner mit einem Montagesitz (31) versehen ist und die Stützstange (32) schwenkbar am Montagesitz (31) befestigt ist.

2. Das NDT-Gerät für Rohrleitungen nach Anspruch 1, wobei der bewegliche Träger (1) eine zylindrische Kapsel (11) und einen Dichtgummischuh (5) umfasst; der Dichtgummischuh (5) und die Sondenprüfanordnung (2) beide an der zylindrischen Kapsel (11) angebracht sind, wobei der Dichtgummischuh (5) sich auf der Vorderseite der Sondenprüfanordnung (2) befindet und das Dichtende des Dichtgummischuhs (5) in derselben Orientierung wie das elastische Prüfelement (23) der Sondenprüfanordnung (2) zeigt, aber in entgegengesetzter Richtung zur Bewegungsrichtung des beweglichen Trägers (1); wobei die Datenverarbeitungseinheit, die erste Signalkonditionierungseinheit und die zweite Signalkonditionierungseinheit alle im Inneren der zylindrischen Kapsel (11) installiert sind und ein Batteriemodul (12), das zur Stromversorgung der Datenverarbeitungseinheit dient, ebenfalls im Inneren der zylindrischen Kapsel (11) installiert ist.

3. Das NDT-Gerät für Rohrleitungen nach Anspruch 1, wobei ein Stoßfänger (4) ferner am Kopf des beweglichen Trägers (1) angeordnet ist.

4. Das NDT-Gerät für Rohrleitungen nach Anspruch 1, wobei mindestens zwei Sätze der Sondenprüfanordnungen (2) vorhanden sind, die jeweils in Reihe auf der Außenseite des beweglichen Trägers (1) und entlang der Achse des beweglichen Trägers (1) angeordnet sind und mit mehreren Prüfkomponenten versehen sind; die Rohrwände in Umfangsrichtung durch den Gesamtprüfbereich abgedeckt werden können, der von den Prüfsonden (24) an den mehreren Prüfkomponenten beigesteuert wird.

5. Das NDT-Gerät für Rohrleitungen nach Anspruch 1, wobei an einer Seite des elastischen Prüfelements (23), die gegen die innere Rohrwand gedrückt wird, eine Kontaktfläche für die Prüfung ausgebildet ist, und sobald das elastische Prüfelement (23) gegen die innere Rohrwand gedrückt ist, die Kontaktfläche für die Prüfung an der inneren Rohrwand anliegen kann.

6. Das NDT-Gerät für Rohrleitungen nach Anspruch 1, wobei die Prüfkomponente ferner mit einem Verbinder (21) versehen ist, der am beweglichen Träger (1) installiert ist, und sich das elastische Prüfelement (23) unter dem elastischen Effekt in Radialrichtung um den Verbinder (21) bewegen kann; wobei die Prüfkomponente ferner mit einem Übergangsabschnitt (22) versehen ist, der sich zwischen dem Verbinder (21) und dem elastischen Prüfelement (23) befindet, und der Verbinder (21) senkrecht zum beweglichen Träger (1) verbunden ist.

7. Das NDT-Gerät für Rohrleitungen nach Anspruch 1, wobei die Sondenprüfanordnung (2) ferner einen ringförmigen Verbinder (21') umfasst, und mehrere Prüfkomponenten in der Sondenprüfanordnung (2) im Umfang des ringförmigen Verbinders (21') beabstandet sind; das elastische Prüfelement (23') sich unter dem elastischen Effekt in Radialrichtung um den ringförmigen Verbinder (21') bewegen kann, und der ringförmige Verbinder (21') auf den beweglichen Träger (1) aufgesteckt ist; wobei die Prüfkomponente ferner mit einem Übergangsabschnitt (22') versehen ist, der sich zwischen dem ringförmigen Verbinder und dem elastischen Prüfelement (23') befindet.

8. Das NDT-Gerät für Rohrleitungen nach Anspruch 1, wobei die erste Signalkonditionierungseinheit ein Digital-Analog-Wandlermodul und ein erstes Signalverstärkermodul umfasst, die in Reihe geschaltet sind; und die zweite Signalkonditionierungseinheit ein zweites Signalverstärkermodul und ein Analog-Digital-Wandlermodul umfasst, die in Reihe geschaltet sind.

9. Das NDT-Gerät für Rohrleitungen nach Anspruch 1, ferner umfassend eine Managementsteuerungseinheit und/oder einen Host-Computer in bidirektionaler Verbindung mit der Datenverarbeitungseinheit.

10. Das NDT-Gerät für Rohrleitungen nach Anspruch 1, wobei die Erregerspule eine Differenzialspeise-spule ist.

11. Das NDT-Gerät für Rohrleitungen nach Anspruch 1, wobei die Erregerspule, die passive Resonanzspule, und die Empfangsspule Leiterplatten-Flachspulen (PCB-Spulen) sind.

12. Das NDT-Gerät für Rohrleitungen nach Anspruch 1, wobei die Erregerspule mit zwei rechteckigen Feldspeisespulen versehen ist, die in einer symmetrischen Anordnung ausgeführt sind; wobei ein Resonanzpunkt-Regelungskondensator in Reihe mit der passiven Resonanzspule geschaltet ist.

13. Das NDT-Gerät für Rohrleitungen nach Anspruch 1, wobei an einem Ende der Radaufhängung (33) in der Nähe des Sensors eine Dichtkappe (37) angeordnet ist; ein Hohlraum zwischen der Dichtkappe (37) und der Radaufhängung (33) gebildet ist, und der Wegstreckendetektor (38) innerhalb des Hohlraums platziert ist.

14. Das NDT-Gerät für Rohrleitungen nach Anspruch 1, wobei eine Feder (35) ferner angeordnet und zwischen der Stützstange (32) und dem beweglichen Träger (1) verbunden ist.

15. Das NDT-Gerät für Rohrleitungen nach Anspruch 1, wobei mehrere Wegstreckenprüfanordnungen (3) vorhanden sind, die im Umfang des beweglichen Trägers (1) beabstandet sind.

**Revendications**

1. Dispositif de contrôle non destructif (NDT) pour pipelines, comprenant :

    un porteur mobile (1), qui se déplace avec un fluide dans un pipeline ou est déplacé par un actionneur ;

    un ensemble de contrôle par sonde (2), qui comporte un composant de contrôle installé sur le porteur mobile (1) et ayant un élément de contrôle dans lequel est encapsulée une sonde de contrôle (24) ;

    dans lequel l'élément de contrôle est un élément de contrôle élastique (23), avec une direction radiale du pipeline comme direction de mouvement élastique, permettant à chacun des éléments de contrôle élastiques (23) de s'appuyer contre une paroi interne de pipeline lors du contrôle ;

    dans lequel le porteur mobile (1) est également pourvu d'un ensemble de contrôle de kilométrage (3) utilisé pour acquérir des données de kilométrage ;

    une unité de traitement de données, une première unité de conditionnement de signaux et une seconde unité de conditionnement de signaux, la sonde de contrôle (24) comprenant une bobine d'excitation, une bobine de réception et une bobine de résonance passive entre la bobine d'excitation et la bobine de réception ;

    dans lequel les centres géométriques de la bobine d'excitation, de la bobine de résonance passive et de la bobine de réception sont colinéaires ;

    dans lequel la bobine de résonance passive est pourvue de plusieurs bobines de résonance secondaires sur PCB qui sont soumises à une connexion en série et à une disposition stratifiée ; et la bobine de réception est pourvue de plusieurs bobines de réception secondaires sur PCB qui sont soumises à une connexion en série et à une disposition stratifiée ;

    l'unité de traitement de données est utilisée pour générer un signal d'excitation ;

    l'unité de traitement de données, la première unité de conditionnement de signaux et la bobine d'excitation sont connectées en séquence ;

    et la bobine de réception, la seconde unité de conditionnement de signaux et l'unité de traitement de données sont connectées en séquence ;

    dans lequel l'ensemble de contrôle de kilométrage (3) est pourvu d'une tige de support (32), d'un support de roue (33), d'une roue odomètre (34) et d'un détecteur de kilométrage (38) ; la tige de support (32) est installée sur le porteur mobile (1) et oscille dans la direction radiale du pipeline ; le support de roue (33) est installé sur la tige de support (32) et oscille dans une direction perpendiculaire à la direction radiale ainsi que dans une direction axiale du pipeline ; la roue odomètre (34) est installée de manière rotative sur le support de roue (33) ; le détecteur de kilométrage (38) est installé sur le support de roue (33) pour acquérir des données de kilométrage par le nombre de révolutions de la roue odomètre (34), et une extrémité de sortie du détecteur de kilométrage (38) est reliée à l'unité de traitement de données ;

    dans lequel une fente ouverte (36) est formée à la jonction entre la tige de support (32) et le support de roue (33), et le support de roue (33) est installé à l'aide d'une charnière à l'intérieur de la fente ouverte (36) ; dans lequel la fente ouverte (36) est rectangulaire et formée sur la face terminale de la tige de support (32) ;

    dans lequel le porteur mobile (1) est également pourvu d'un support de montage (31) et la tige de support (32) est connectée à l'aide d'une charnière sur le support de montage (31).

2. Dispositif NDT pour pipelines selon la revendication 1, dans lequel le porteur mobile (1) comprend une capsule cylindrique (11) et une coupelle en caoutchouc étanche (5) ; la coupelle en caoutchouc étanche (5) et l'ensemble de contrôle par sonde (2) sont tous deux installés sur la capsule cylindrique (11), la coupelle en caoutchouc étanche (5) étant située sur le côté avant de l'ensemble de contrôle par sonde (2), et l'extrémité étanche de la coupelle en caoutchouc étanche (5) étant dans la même orientation que l'élément de contrôle élastique (23) de l'ensemble de contrôle par sonde (2) mais dans une direction opposée au mouvement du porteur mobile (1) ;

    dans lequel toutes les unité de traitement de données, première unité de conditionnement de signaux et seconde unité de conditionnement de signaux sont installées à l'intérieur de la capsule cylindrique (11), et un module de batterie (12) utilisé pour alimenter l'unité de traitement de données est également installé à l'intérieur de la capsule cylindrique (11).

3. Dispositif NDT pour pipelines selon la revendication 1, dans lequel un panneau pare-chocs (4) est également disposé à l'avant du porteur mobile (1).

4.  Dispositif NDT pour pipelines selon la revendication 1, dans lequel il existe au moins deux groupes d'ensembles de contrôle par sonde (2), chacun étant disposé en séquence sur le côté externe du porteur mobile (1) et le long d'un axe du porteur mobile (1), et étant pourvu de plusieurs composants de contrôle à l'intérieur ; les parois de pipeline dans une direction circonférentielle sont couvertes par l'étendue totale de contrôle fournie par les sondes de contrôle (24) sur les plusieurs composants de contrôle.

5.  Dispositif NDT pour pipelines selon la revendication 1, dans lequel une surface de contact pour le contrôle est formée à un côté de l'élément de contrôle élastique (23) qui est appuyé contre la paroi interne de pipeline, et une fois que l'élément de contrôle élastique (23) est appuyé contre la paroi interne de pipeline, la surface de contact pour contrôle est attachée à la paroi interne de pipeline.

6.  Dispositif NDT pour pipelines selon la revendication 1, dans lequel le composant de contrôle est également pourvu d'un connecteur (21) qui est installé sur le porteur mobile (1), et l'élément de contrôle élastique (23) se déplace dans la direction radiale autour du connecteur (21) sous l'effet élastique ;
    dans lequel le composant de contrôle est également pourvu d'une section de transition (22) qui est située entre le connecteur (21) et l'élément de contrôle élastique (23), et le connecteur (21) est en connexion verticale avec le porteur mobile (1).

7.  Dispositif NDT pour pipelines selon la revendication 1, dans lequel l'ensemble de contrôle par sonde (2) comprend également un connecteur annulaire (21'), et plusieurs composants de contrôle dans l'ensemble de contrôle par sonde (2) sont espacés sur la périphérie du connecteur annulaire (21') ; l'élément de contrôle élastique (23') se déplace dans la direction radiale autour du connecteur annulaire (21') sous l'effet élastique, et le connecteur annulaire (21') est manchonné sur le porteur mobile (1) ;
    dans lequel le composant de contrôle est également pourvu d'une section de transition (22') qui est située entre le connecteur annulaire et l'élément de contrôle élastique (23').

8.  Dispositif NDT pour pipelines selon la revendication 1, dans lequel la première unité de conditionnement de signaux comprend un module de conversion numérique-analogique et un premier module d'amplification de signaux qui sont connectés en séquence ; et la seconde unité de conditionnement de signaux comprend un second module d'amplification de signaux et un module de conversion analogique-numérique qui sont connectés en séquence.

9.  Dispositif NDT pour pipelines selon la revendication 1, comprenant en outre une unité de contrôle de gestion et/ou un ordinateur hôte en connexion bidirectionnelle avec l'unité de traitement de données.

10. Dispositif NDT pour pipelines selon la revendication 1, dans lequel la bobine d'excitation est une bobine différentielle.

11. Dispositif NDT pour pipelines selon la revendication 1, dans lequel la bobine d'excitation, la bobine de résonance passive et la bobine de réception sont des bobines planes PCB.

12. Dispositif NDT pour pipelines selon la revendication 1, dans lequel la bobine d'excitation est pourvue de deux bobines de champ rectangulaires soumises à une disposition symétrique ;
    dans lequel un condensateur de réglage de point de résonance est connecté en série à la bobine de résonance passive.

13. Dispositif NDT pour pipelines selon la revendication 1, dans lequel un bouchon d'extrémité étanche (37) est disposé à une extrémité du support de roue (33) proche du capteur, une cavité est formée entre le bouchon d'extrémité étanche (37) et le support de roue (33), et le détecteur de kilométrage (38) est placé à l'intérieur de la cavité.

14. Dispositif NDT pour pipelines selon la revendication 1, dans lequel un ressort (35) est également prévu et connecté entre la tige de support (32) et le porteur mobile (1).

15. Dispositif NDT pour pipelines selon la revendication 1, dans lequel il y a plusieurs ensembles de contrôle de kilométrage (3) qui sont espacés dans une direction circonférentielle du porteur mobile (1).

FIG. 1

FIG. 2

FIG. 3

23

α

R₁

FIG. 4

24

FIG. 5

22'

2

21'

23'

FIG. 6

FIG. 7

FIG. 8

FIG. 9

FIG. 10

FIG. 11

EP 4 345 449 B1

FIG. 12

FIG. 13

25

FIG. 14

FIG. 15

FIG. 16

**(A)**

30°  45°  60°

**(B)**

Φ5mm  Φ7mm  Φ10mm

**(C)**

Depth: 4mm  Depth: 6mm  Depth: 8mm

**(D)**

Depth: 2mm  Depth: 3mm  Depth: 4mm

10mm
5mm
4mm
4/6/8 mm
2mm

FIG. 17

FIG. 18

FIG. 19

FIG. 20

FIG. 21

Time/s

FIG. 22

FIG. 23

**EP 4 345 449 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010288049 A1